# EUROPÄISCHE PATENTSCHRIFT

(11) **EP 2 619 382 B1**
(45) Veröffentlichungstag und Bekanntmachung des Hinweises auf die Patenterteilung: **25.07.2018**
(21) Anmeldenummer: 11772873.3
(22) Anmeldetag: 26.09.2011
(51) Int. Cl.: E04F 13/08, E04F 13/14, F24S 25/61, F24S 25/00, F24S 25/35

(54) **BEFESTIGUNGSSYSTEM FÜR FASSADENELEMENTE, EINLEGEPROFILSCHIENE HIERFÜR UND MONTAGEVERFAHREN**
FASTENING SYSTEM FOR FACADE ELEMENTS, PROFILED INSERT RAIL THEREFOR AND ASSEMBLY METHOD
SYSTÈME DE FIXATION POUR ÉLÉMENTS DE FAÇADE, RAILS À PROFIL D'INSERTION PRÉVUS À CET EFFET, ET PROCÉDÉ DE MONTAGE

(30) Priorität: 24.09.2010 DE 102010046376
(43) Veröffentlichungstag der Anmeldung: 31.07.2013
(73) Patentinhaber: STO SE & Co. KGaA, 79780 Stühlingen (DE)
(72) Erfinder: BAUER, Timo, 74226 Nordheim (DE); HANSELMANN, Timo, 74575 Schrozberg (DE); BARIE, Matthias, 74635 Kupferzell (DE)
(74) Vertreter: Schatt, Markus F.
(86) Internationale Anmeldenummer: PCT/EP2011/004811
(87) Internationale Veröffentlichungsnummer: WO 2012/038096

(56) Entgegenhaltungen:
- EP-A1- 0 428 487
- WO-A1-01/03206
- DE-A1-102005 058 529
- DE-U1-202010 005 003
- FR-A1- 2 954 791

## Beschreibung

Die Erfindung betrifft eine Einlegeprofilschiene für ein Befestigungssystem zur Befestigung von Fassadenelementen, insbesondere Photovoltaikmodulen und Solarthermische Kollektoren, ein entsprechendes Befestigungssystem, ein Montageverfahren unter Verwendung der Einlegeprofilschiene bzw. des Befestigungssystems sowie eine Fassade mit durch ein derartiges Befestigungssystem gehaltenen Fassadenelementen.
Aus der DE 20 2010 0050003 U1, der WO 01/03206 A1 und der
DE 10 2005 058529 A1 sind derartige Einlegeprofilschienen bekannt.
Die deutsche Normung für Außenwandverkleidungen, beispielsweise nach DIN 18516 Teil 4 für Platten aus Einscheiben-Sicherheitsglas von Februar 1990, Beuth Verlag GmbH, Berlin, fordert unter anderem, dass bei allen Befestigungsarten auch unter Last- und Temperatureinfluss kein Kontakt zwischen Glas und Metall oder der Außenwand eines Gebäudes auftritt und die Platten nach dem Stand der Technik dauerhaft und witterungsbeständig auf weicher Bettung, z. B. auf Elastomeren gelagert sein müssen.
Aus der EP 0 428 487 A1 ist eine Montagevorrichtung bekannt, die Tragprofile aus Aluminium aufweist, die in einer Ebene anzuordnen und mit Abstandshalter an einem Baukörper zu verankern sind. Zur Befestigung von Fassadenverkleidungsplatten an den Tragprofilen sind an den Tragprofilen Tragkonsolen mit jeweils einer horizontalen Nut befestigt. In die Tragkonsolen sind jeweils zwei Schiebehalter eingesetzt, welche die statische Vertikallast einer ersten und einer zweiten, durch eine Fuge getrennten Fassadenverkleidungsplatte aufnehmen, und jeweils mit einem oberen Flansch in eine untere Horizontalnut einer oberen Fassadenverkleidungsplatte und mit einem unteren Flansch in eine obere Horizontalnut in der Stirnfläche einer unteren Fassadenverkleidungsplatte eingreifen. Ebenso werden die horizontalen Lasten für eine dritte und eine vierte, durch eine Fuge getrennten Fassadenverkleidungsplatte durch dasselbe Element übernommen. Die Verschiebbarkeit der Schiebehalter auf der jeweiligen Tragkonsole erlaubt ein nachträgliches Auswechseln der einzelnen Fassadenverkleidungsplatte, wenn die Fassadenverkleidungsplatte an einem hinteren Steg ihrer Horizontalnut entsprechende Ausbrüche aufweist.
Nachteilig bei diesem System ist es, dass alle Fassadenverkleidungsplatten an den Stirnseiten genutet sein müssen. Dies ist besonders bei Photovoltaikmodulen und Solarthermischen Kollektoren ungünstig. Auch muss zum Verschieben der Schiebehalter beispielsweise zum Auswechseln einer Fassadenverkleidungsplatte eine entsprechende horizontale Fuge zwischen der oberen und der unteren Fassadenverkleidungsplatte vorhanden sein, die durch ein zusätzliches Abdeckungselement zu verkleiden wäre.
Es ist eine Aufgabe der vorliegenden Erfindung, ein verbessertes Befestigungselement bzw. verbessertes Befestigungssystem für Fassadenverkleidungsplatten unter Berücksichtigung der Normungsvorschriften, vorzugsweise zur Verwendung bei Fassadenverkleidungsplatten in Form von Solarmodulplatten bzw. Photovoltaikmodulen, mit im Vergleich zu bekannten Systemen einfacherem konstruktiven Aufbau vorzuschlagen, welches einfacher und schneller zu montieren ist. Eine weitere oder alternative Aufgabe der vorliegenden Erfindung besteht darin, ein verbessertes Befestigungselement bzw. ein verbessertes Befestigungssystem für Fassadenverkleidungsplatten bereitzustellen, sodass die einzelnen Fassadenverkleidungsplatten mit geringerem Aufwand montierbar und demontierbar bzw. austauschbar sind.

Diese Aufgaben werden mit den Merkmalen des unabhängigen Anspruchs gelöst.
Weitere Ausführungsformen sind in den auf diese rückbezogenen Unteransprüchen angegeben.

Der Kerngedanke der Erfindung liegt in einer gegenüber dem Stand der Technik alternativen Einlegeprofilschiene für ein Befestigungssystem für, insbesondere plattenförmige, Fassadenelemente, die auch als Fassadenbekleidungs- oderverkleidungsplatten bezeichnet werden. Mit der besonderen Ausgestaltung der Länge bzw. Höhe eines Haltestegs einer Tragaufnahme für ein oberhalb der Einlegeprofilschiene angeordnetes Fassadenelement und eines Haltestegs einer Halteaufnahme für ein unterhalb der Einlegeprofilschiene angeordnetes Fassadenelement, nämlich indem der Haltesteg der Halteaufnahme um ein bestimmtes Maß höher ist, insbesondere eineinhalbmal, bevorzugt doppelt und besonders bevorzugt zweieinhalb bis dreimal so hoch ist, wie der Haltesteg der Tragaufnahme, vereinfacht sich die Montage der Fassadenelemente deutlich, da ein solches Befestigungssystem ein äußerst schnelles und einfaches Montageverfahren ermöglicht.

Eine erfindungsgemäße Einlegeprofilschiene eignet sich besonders als horizontales Trag- und Halteelement in einem Befestigungssystem für eine vorgehängte Verkleidung aus, bevorzugt plattenförmigen, Fassadenelementen, besonders bevorzugt gerahmten Photovoltaikmodulen und solarthermischen Kollektoren, zur Verankerung an einem Baukörper.

Dazu besitzt eine Einlegeprofilschiene eine Montageplatte zur mittelbaren oder unmittelbaren Verankerung am Baukörper. An der Montageplatte befindet sich eine senkrecht, bevorzugt mittig, mit einem ersten Ende angeordnete Kragplatte mit zueinander im Wesentlichen parallelen Kragflächen. Auf einer oberen der zueinander im Wesentlichen parallelen Kragflächen ist eine im Wesentlichen U-förmige Tragaufnahme für ein oberes Fassadenelement angeordnet. Die Tragaufnahme ist an einem zweiten Ende der Kragplatte von einem kurzen, insbesondere im in eine Fassade eingebauten Zustand sichtbaren, Haltesteg abgeschlossen. Auf einer unteren der zueinander im Wesentlichen parallelen Kragflächen ist eine im Wesentlichen U-förmige Halteaufnahme für ein unteres Fassadenelement angeordnet. Die Halteaufnahme ist ebenfalls am zweiten Ende der Kragplatte von einem langen, insbesondere sichtbarem, Haltesteg abgeschlossen. Die unterschiedliche Ausgestaltung der Haltestege hat den Vorteil, dass durch die unterschiedliche Schenkellänge der Haltestege eine Montage eines Fassadenelements, insbesondere Photovoltaikmodule und solarthermische Kollektoren, dass keine Klemmvorrichtigen wie Klemmleisten erforderlich sind. Die erfindungsgemäße Einlegeprofilschiene erlaubt eine Einsetzen von Fassadenelementen, in eine vormontierte obere und eine vormontierte untere erfindungsgemäßes Einlegeprofilschiene, wobei keine zusätzlichen Haltevorrichtungen nach dem Einsetzen in die obere und untere Einlegeprofilschien notwendig ist.
Der lange Haltesteg der erfindungsgemäßen Einlegeprofilschiene ist (gemessen von der Kragplatte) höher, insbesondere eineinhalbmal, bevorzugt doppelt und besonders bevorzugt zweieinhalb bis dreimal so hoch, wie der Haltesteg der Tragaufnahme.
Der lange Haltesteg und der kurze Haltesteg können ein am zweiten Ende der Kragplatte angeordnetes, insbesondere integrales, Sichtprofil der Einlegeprofilschiene bilden. Der Querschnitt des Sichtprofils ist sichtseitig für Designzwecke frei gestaltbar. So kann der Querschnitt beispielsweise in Form eines Kreisabschnitts ausgeführt werden.
Unter einer Kragplatte wird hier - ähnlich zu einem Kragarm - eine einseitig gelagerte, im Wesentlichen waagerechte Platte, die eine Last trägt, verstanden, d.h. eine Tragplatte, die nur ein Auflager hat. Als Platte im Vergleich zu einem Stab oder Balken ist die Kragplatte deutlich länger und breiter als hoch.

Die Tragaufnahme und die Halteaufnahme sind jeweils in einem vorbestimmten, bevorzugt gleichen, Abstand zur Montageplatte an der Kragplatte angeordnet. Dadurch kann ein definierter Zwischenraum zwischen einem Fassadenelement und der von den Montageplatten der Einlegeprofilschienen definierten Ebene sichergestellt werden, der beispielsweise ausreichenden Raum für eine rückseitige Verkabelung bzw. Verohrung von Photovoltaikmodulen bzw. Solarthermischen Kollektoren als Fassadenelemente lässt.

Dies wird dadurch erreicht, dass die Tragaufnahme von einem Abschnitt der oberen Kragfläche als Grundfläche sowie einem oberen, bevorzugt senkrecht an der Kragplatte angeordneten, Rückensteg und dem am zweiten Ende der Kraglatte angeordneten kurzen Haltesteg als Schenkel gebildet ist. Ebenso wird die Halteaufnahme von einem Abschnitt der unteren Kragfläche als Grundfläche sowie einem unteren, bevorzugt senkrecht an der Kragplatte angeordneten, Rückensteg und dem am zweiten Ende der Kraglatte angeordneten langen Haltesteg als Schenkel gebildet. Zur verdeckten Verbindung benachbarter Einlegeprofilschienen weist die Kragplatte an zur Montageplatte senkrechten Stirnseiten Ausnehmungen auf. In diese Ausnehmungen können für Verbindungselemente zur Verbindung mit einer jeweils benachbarten Einlegeprofilschiene eingesetzt werden. Die Ausnehmungen können auch einen die Stirnseiten verbindenden Durchgangskanal in der Kragplatte bilden. Selbstverständlich kann in die eine solche Ausnehmung auch an einem Fassadenrand anstelle eines Verbindungselements eine Abdeckung oder ein Abschlussstück eingesetzt werden.
An der jeweiligen Ausnehmung zur Aufnahme eines Verbindungselements sind in der Montageplatte an die Ausnehmung angrenzende Sackausnehmungen ausgebildet, die mit der Ausnehmung über eine Durchgangsöffnung in Verbindung stehen. Bevorzugt erstrecken sich die Ausnehmung und die Sackausnehmung über die gesamte Längsausdehnung der Einlegeprofilschiene. Die Sachausnehmung hat die Aufgabe, das Einschrauben einer Madenschraube zum Fixieren des Verbindungselements zu vereinfachen. Aus Witterungstechnischen Gründen ist die Sackausnehmung an der Fassadenmontageseite der Montageplatte ausgebildet. Ferne ist die Sackausnehmungen mit Drainagenuten versehe, die zum Sammeln und Ableiten von Wasser vorgesehen sind.
Die Kombination aus Ausnehmung und Verbindungselementen hat den Vorteil, dass die Einlegeprofilschienen auf einfache Art und Weise in ihrer Längserstreckung verlängert werden können. Außerdem erlaubt die stückweise Montage der einzelnen Einlegeprofilschienen mittels der Verbindungselemente, das einfache Abbauen von Zwangsspannungen, die beispielsweise durch unterschiedliche Temperaturausdehnungen der jeweiligen Bauteile verursacht werden können. Denn bevorzugt wird das Verbindungselement nur einseitig mittels Schrauben an der Ausnehmung der Einlegeprofilschiene befestigt, so dass das Verbindungselement einseitig als Festlager und als Loslager an der Ausnehmung angebracht ist, wobei temperaturbedinget Längenausdehnungen der Einlegeprofilschien in deren Längserstreckungsrichtung unaufwendig wegen des Loslagers abgebaut und dadurch der Aufbau von Zwangsspannungen vermieden werden kann.
Die Einlegeprofilschiene kann besonders einfach als ein einstückiges, bevorzugt aus Aluminium bzw. einer Aluminiumlegierung gefertigtes, Strangpressprofil gefertigt werden bzw. sein.
In einer vorteilhaften Ausführung besitzt die Montageplatte die U-förmigen Tragaufnahme bzw. die U-förmigen Halteaufnahme überragende Abschnitte. Diese Abschnitte können als bevorzugte Montageabschnitte verwendet werden, um beispielsweise mittels entsprechend dimensionierter Schraub- oder Nietverbindungen oder dergleichen die Einlegprofilschiene mittelbar oder unmittelbar am Baukörper zu verankern. Dazu können in den bevorzugten Montageabschnitten bereits entsprechende Bohrungen in Form von Rundlöchern und/oder Langlöchern vorgesehen sein. Dadurch, dass die Montageabschnitte andere an den Kragflächen vorhandene Strukturen wie die Rückenstege oder die Trag- bzw. Halteaufnahme überragen, ist der Montageabschnitt ohne Behinderung für Montagewerkzeuge, wie eine Bohrmaschine, Schrauber oder Nietwerkzeug zugänglich. Damit ist ein schneller Aufbau eines Fassadenbefestigungssystems möglich. Vorgeschlagen wird auch ein Befestigungssystem für eine vorgehängte Verkleidung aus, bevorzugt plattenförmigen, Fassadenelementen, besonders bevorzugt gerahmten Photovoltaikmodulen und Solarthermischen Kollektoren, zur Verankerung an einem Baukörper.
Das Befestigungssystem besitzt wenigstens zwei, bevorzugt horizontal angeordnete, zueinander parallele Einlegeprofilschienen zum Tragen und Halten wenigstens eines Fassadenelements, die in einem vorbestimmten, insbesondere vertikalen, Abstand zueinander befestigt sind.

Zum Tragen des Fassadenelements weist eine untere der wenigstens zwei Einlegeprofilschienen eine nach oben gerichtete im Wesentlichen U-förmige Tragaufnahme auf. Die Tragaufnahme ist auf der sichtbaren Fassadenseite von einem kurzen Haltesteg abgeschlossen und nimmt eine untere Kante des Fassadenelements auf.
Zum Halten des Fassadenelements an einer oberen Kante des Fassadenelements weist eine obere der wenigstens zwei Einlegeprofilschienen eine nach unten gerichtete im Wesentlichen U-förmige Halteaufnahme auf, die auf der sichtbaren Fassadenseite von einem langen Haltesteg abgeschlossen ist.
Die Tragaufnahme sowie die Halteaufnahme nehmen jeweils die obere bzw. untere Kante des Fassadenelements (Montagekante) auf und halten das Fassadenelement in der Fassadenebene. Die Tragaufnahme trägt das Gewicht des Fassadenelements. Der lange Haltesteg der Halteaufnahme der oberen Einlegeprofilschiene ist (z.B. gemessen von der Kragplatte) höher, insbesondere eineinhalbmal, bevorzugt doppelt und besonders bevorzugt zweieinhalb bis dreimal so hoch bzw. lang, wie der Haltesteg der Tragaufnahme, wie der kurze Haltesteg der Tragaufnahme der unteren Einlegeprofilschiene.
Die Einlegeprofilschienen des Befestigungssystems besitzen jeweilige Montageplatten zur mittelbaren oder unmittelbaren Verankerung am Baukörper. Bevorzugt sind von zwei vertikal benachbarten Einlegeprofilschienen jeweils eine über ein Festlager und eine über ein Loslager am Baukörper verankert.
Zur mittelbaren Verankerung am Baukörper können die Einlegeprofilschienen an, bevorzugt vertikalen, Tragprofilen verankert sein. Diese Tragprofile wiederum können selbst über, bevorzugt justierbare, Abstandhalter, am Baukörper verankern sein.

In dem vorgeschlagenen Befestigungssystem eignet sich als Einlegeprofilschiene zwischen einem oberen Fassadenelement und einem unteren Fassadenelement besonders gut eine erfindungsgemäße Einlegeprofilschiene.

An den Innenseiten der Tragaufnahme bzw. der Haltaufnahme und/oder an den Kanten der Fassadenelemente können zur Vermeidung eines direkten Kontaktes zwischen Fassadenelementen und Einlegeprofilschienen elastische Schutzelemente vorgesehen sein.

Die erfindungsgemäße Einlegeprofilschiene bzw. das vorgeschlagene Befestigungssystem ermöglichen ein besonders schnelles und einfaches Verfahren zur Montage von Fassadenelementen, bevorzugt in Form von Photovoltaikmodulen und Solarthermischen Kollektoren in das Befestigungssystem. Die Montage eines Fassadenelements erfolgt im Wesentlichen mit den folgenden Schritten:
- Einschieben einer oberen Kante eines Fassadenelements unter einem Einschubwinkel gegenüber einer durch die Fassade definierten Fassadenebene in eine Halteaufnahme einer oberen Einlegeprofilschiene zweier vertikal benachbart zueinander angeordneten Einlegeprofilschienen,
- Einklappen des Fassadenelements in die Fassade durch Kippen des Fassadenelements um den Einschubwinkel in Richtung der Fassadenebene, und
- Einlegen einer unteren Kante des Fassadenelements in eine Tragaufnahme einer unteren Einlegeprofilschiene der zwei benachbart zueinander angeordneten Einlegeprofilschienen.
Die Erfindung betrifft auch eine Fassade für einen Baukörper, der wenigstens mit, bevorzugt im Wesentlichen plattenförmigen, Fassadenelementen, insbesondere Photovoltaikmodulen und Solarthermischen Kollektoren, teilverkleidet ist, wobei die Fassadenelemente über ein erfindungsgemäßes Befestigungssystem gemäß Anspruch 8 oder 9 am Baukörper verankert sind.
Die Erfindung eignet sich besonders als Befestigungssystem für Photovoltaikmodule und Solarthermischen Kollektoren als Fassadenelemente, ganz besonders für gerahmte Photovoltaikmodule und Solarthermische Kollektoren.

Das vorgeschlagene Befestigungssystem ermöglicht eine im Vergleich zu bekannten Systemen einfachere und schnellere Montage des Systems aufgrund der wenigen aufeinander abgestimmten Komponenten.
Weiter vereinfacht sich mit dem Befestigungssystem die eigentliche Montage der Fassadenelemente deutlich, da das Befestigungssystem ein äußerst schnelles und einfaches Montageverfahren ermöglicht.
Weitere vorteilhafte Ausgestaltungen der Erfindung, sowie Ausführungsbeispiele hierzu, werden nachstehend in Verbindung mit den beigefügten Zeichnungsfiguren näher erläutert. Funktionsähnliche Bauteile oder Komponenten sind teilweise mit gleichen Bezugszeichen versehen. Die innerhalb der Beschreibung des Ausführungsbeispiels verwendeten Begriffe "links", "rechts", "oben", "unten" beziehen sich auf die Zeichnungsfiguren in einer Ausrichtung mit normal lesbaren Figurenbezeichnung und Bezugszeichen. Die unten angegeben Verhältnisse und Quotienten können im Wesentlichen bei den bevorzugten Ausführungsformen aus den hiernach beschriebenen Figuren entnommen werden. Hierbei zeigt:
Figur 1 einen Querschnitt eines Ausführungsbeispiels für eine erfindungsgemäße Einlegeprofilschiene,
Figur 2 eine perspektivische Darstellung des Ausführungsbeispiels für die Einlegeprofilschiene der Figur 1,
Figur 3 eine perspektivische Darstellung eines Ausführungsbeispiels für ein Verbindungselement für zwei benachbarte erfindungsgemäße Einlegeprofilschienen der Figur 2,
Figur 4 eine perspektivische Darstellung eines erfindungsgemäßen Befestigungssystems, und
Figuren 5a bis 5c veranschaulichen den Montagevorgang eines Photovoltaikmoduls als Fassadenelement in das erfindungsgemäße Befestigungssystem der Figur 4.

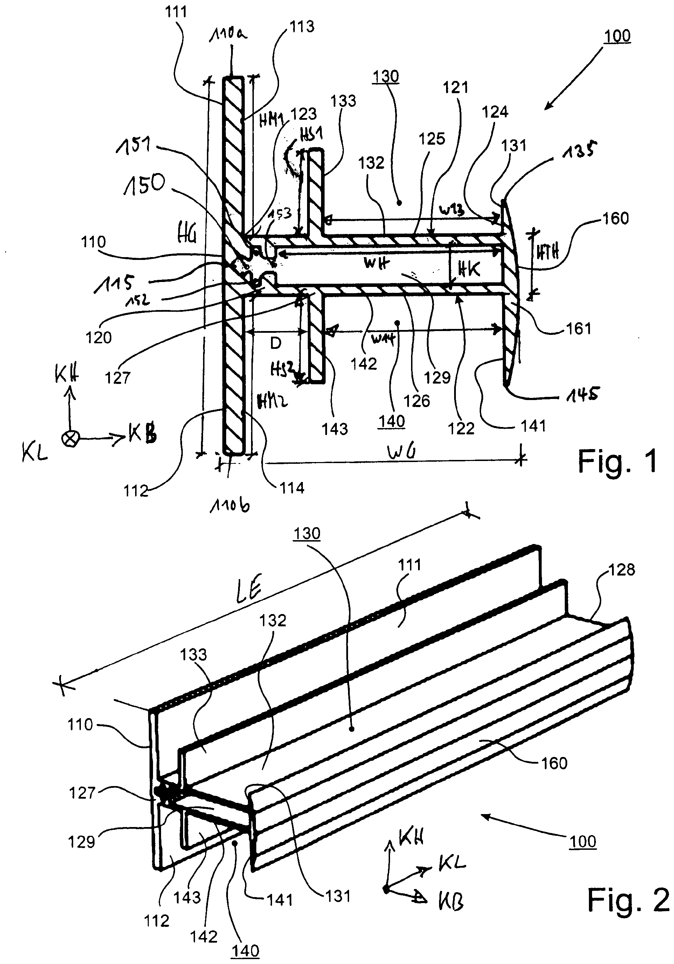

Die Figuren 1 und 2 veranschaulichen ein Ausführungsbeispiel für eine Einlegeprofilschiene 100 der Erfindung als horizontales Trag- und Halteelement eines bevorzugt plattenförmigen, Fassadenelements, insbesondere eines gerahmten Photovoltaikmoduls, in einem an einem Baukörper verankertem Befestigungssystem für eine vorgehängte Verkleidung mit einer Vielzahl solcher Fassadenelemente.

Ferner ist in den Figueren 1 und 2 ein Bezugssystem gezeigt, mit den Koordinatenachsen KH, KB und KL, wobei KH ein Höhenkoordinate anzeigt, die sich im Wesentlichen in der Bauteilhöhe der Einlegeprofilschiene 100 bzw. vertikal erstreckt, KB eine Breitenkoordinate anzeigt, die sich im Wesentlichen in der Bauteildicke der Einlegeprofilschiene und horizontal erstreckt, und KL eine Längsrichtung anzeigt, die sich im Wesentlichen in der Längsabmessung der Einlegeprofilschiene und ebenfalls horizontal erstreckt.

Die Einlegeprofilschiene ist als ein einstückiges, aus Aluminium bzw. einer Aluminiumlegierung bestehendes Strangpressprofil gefertigt und weist eine Längenabmessung LE in Längsrichtung LE bevorzugt im Bereich von etwa 1,10 bis 130 m, bevorzugt von 1,20 m auf.

Die Einlegeprofilschiene 100 besitzt eine Montageplatte 110. An der Montageplatte 110 ist im Wesentlichen senkrecht und mittig eine Kragplatte 120 mit zueinander im Wesentlichen parallelen Kragflächen, nämlich einer oberen Kragfläche 121 und einer unteren Kragfläche 122, mit einem ersten Kragplattenende 123 der Kragplatte 120 angeordnet.

Auf der oberen Kragfläche 121 befindet sich eine im Wesentlichen U-förmige Tragaufnahme 130 für ein oberes Fassadenelement. Die Tragaufnahme 130 weist eine Weitenöffnung W13 auf, die etwa um das 1,02-fache bis 1,05-fache größer ist die Breite des unteren Endabschnittes des Fassadenelements, der in die Tragaufnahme 130 einzusetzen ist. Die Tragaufnahme 130 ist an einem zweiten Kragplattenende 124 der Kragplatte 120 von einem kurzen Haltesteg 131 abgeschlossen. Die Tragaufnahme 130 ist durch einen oberen Kragflächenabschnitt 125 der oberen Kragfläche 121 als Grundfläche 132 sowie einem oberen, senkrecht an der Kragplatte 120 angeordneten Rückensteg 133 und dem am zweiten Kragplattenende 124 angeordneten kurzen Haltesteg 131 als Schenkel gebildet. Die Rückenstege133, 143 weisen jeweils eine Höhenabmessung HS1 und HS2 auf. Bevorzugt sind die Höhenabmessungen im Wesentlichen gleich. Es liegt jedoch auch im Bereich der Erfindung, dass die Höhenabmessungen unterschiedlich groß in der Höhenkoordinate KH und / oder der Breitenkoordinate KB ausgebildet sind. Die Höhenabmessungen HM1, HM2 der Montageplatte 110 zeigen den Abstand des oberen Endabschnittes 110a und unteren Endabschnittes 110b zu der Oberfläche der oberen Tragaufnahme 130 bzw. der unteren Halteaufnahme 140 an. Der Quotient aus HM1 und HS1 bzw. HM2 und HS2 liegt im Bereich von etwa 1,7 bis 2,1 und bevorzugt bei 1,8 aus Material- und Gewichtsgründen.

An der unteren Kragfläche 122 befindet sich eine im Wesentlichen U-förmige Halteaufnahme 140 für ein unteres Fassadenelement. Die Halteaufnahme 140 weist eine Weitenöffnung W14 auf, die etwa die etwa um das 1,02-fache bis 1,05-fache größer ist als die Breite des oberen Endabschnittes des Fassadenelements, der in die Tragaufnahme 130 einzusetzen ist. Die Halteaufnahme 140 ist am zweiten Kragplattenende 124 von einem langen Haltesteg 141 abgeschlossen. Die Halteaufnahme 140 ist von einem Kragflächenabschnitt 126 der unteren Kragfläche 122 als Grundfläche 142 sowie einem unteren, senkrecht an der Kragplatte 120 angeordneten, Rückensteg 143 und dem am zweiten Kragplattenende 124 angeordneten langen Haltesteg 141 als Schenkel gebildet.

Die Tragaufnahme 130 und die Halteaufnahme 140 sind jeweils mit gleichem Abstand D zur Montageplatte 110 an der Kragplatte 120 angeordnet. Der damit vorhandene Zwischenraum zwischen einem Fassadenelement und der von der Montageplatte 110 der Einlegeprofilschienen 100 definierten Ebene kann für die rückseitige Verkabelung von Photovoltaikmodulen und solarthermischen Kollektoren als Fassadenelemente verwendet werden. Der Abstand D ergibt sich im Wesentlichen von der verwendeten Schraubverbindung an dem Befestigungspunkt 113. Außerdem dient der Zwischenraum zwischen der Tragaufnahme 130 bzw. Halteaufnahme 140 und der Montageplatte 110 zur Aufnahme von Kabel der Fassadenelemente, wie Stromkabeln oder Wasserleitungen, je nach verwendetem Fassadenelement.

Der lange Haltesteg 141 ist gemessen jeweils von der Kragplatte 120 höher bzw. länger als der kurze Haltesteg 131. Im Ausführungsbeispiel ist der lange Haltesteg 141 etwa 2,7-mal höher wie der kurze Haltesteg. Es sei darauf hingewiesen, dass besonders die genaue Dimensionierung in der Praxis auch von den Dimensionen, besonders der Dicke bzw. Stärke des Fassadenelements mit beeinflusst ist. Jedenfalls ist es immer richtig, dass der lange Haltesteg 141 länger sein muss als der kurze Haltesteg 131. Der lange Haltesteg kann auch bei entsprechend vorgegebenen Dimensionen des Fassadenelements als Randbedingungen eineinhalbmal oder doppelt oder auch zweieinhalb bis dreimal so hoch - wie im Ausführungsbeispiel 2,7-mal so hoch, wie der kurze Haltesteg sein. Durch die Kombination aus langen und kurzen Haltesteg 131, 141 ergibt sich die erfindungsgemäße einfache Montage und Klemmwirkung der Fassadenelemente ohne zusätzliche Klemme- oder Schraubelemente.

Der lange Haltesteg 141 und der kurze Haltesteg 131 bilden ein am zweiten Kragplattenende 124 angeordnetes Sichtprofil 160 der Einlegeprofilschiene 100 mit einem Querschnitt 161 in Form eines Kreisabschnitts, insbesondere konvexen Kreisabschnittes. Der konvexe Kreisabschnitt insbesondere am oberen Endabschnitt 135 des kurzen Haltesteges 131 verhindert ein Ablagern von sich witterungsbedingt ergebenden Schmutzpartikeln und erlaubt ein besseres Abfließen von Wasser. Ferner erlaubt die Kombination der konvexen Kreisgestalt am oberen Endabschnitt 135 des kurzen Haltesteges und am unteren Endabschnitt 145 des langen Haltesteges 141 eine einfachere Montage als bei einer rechtwinkligen Ausgestaltung, da ein Hängenbleiben oder Anstoßen der unteren Endabschnitte der Fassadenelemente vermieden werden kann. Die Endabschnitte 135, 145 können auch nur schräge abgefaste Rampenflächen sein. Ferner trägt die konvexe Ausbildung zum ästhetischen Gesamteindruck der Einlegprofilschiene bei, da dieser Bereich der Haltestege nicht von einem Fassadenelement bedeckt wird und zum Gesamteindruck einer mit den erfindungsgemäßen Einlegeprofilschienen 100 versehenen Fassade beiträgt. Dadurch, dass die Fassadenelemente hinter den jeweiligen Haltestegen angeordnet werden, kann auf Nutaussparungen zum Befestigen der Fassadenelemente in der oberen Kragfläche 121 und der unteren Kragfläche 122 verzichtet werden, was die Herstellung der erfindungsgemäßen Einlegeprofilschienen 100 vereinfacht und kostengünstiger macht.

Die Kragplatte 120 besitzt an den zur Montageplatte 110 senkrechten Stirnseiten 127, 128 eine Ausnehmunge 129 für Verbindungselemente 200, 201, 202 zur Verbindung mit einer jeweils benachbarten Einlegeprofilschiene. Die Ausnehmung 129 besteht in einem die Stirnseiten verbindenden Durchgangskanal in der Kragplatte 120, der sich in Längsrichtung KL erstreckt und eine Höhenabmessung HK und eine Durchgangsweite WH in Richtung der Breitenkoordinate KB aufweist.

Nach einer bevorzugten Ausführungsform der Einlegeprofilschiene ist vorgesehen, dass die sich in der Breitenkoordinate KB erstreckende Länge oder Durchgangsweite WH der Ausnehmung oder des Aufnahmeraums 129 größer ist wie die sich jeweils in der Breitenkoordinate KB erstreckenden Längen oder Weitenöffnungen W13 und W14 der Tragaufnahme 130 bzw. Halteaufnahme 140. Alternativ oder zusätzlich kann vorgesehen sein, dass die Höhenweite HK der Ausnehmung oder des Aufnahmeraums 129 mindestens 50% der sich in der Höhenkoordinate KH erstreckenden Dicke HTH der Kragplatte 120 beträgt. Auf diese Weise kann das Verbindungselement 200 eine ausreichende Torsionssteifigkeit gewährleisten, so dass auch mehrere Einlegeprofilschienen 100 in Längrichtung KL hintereinander ausgerichtet werden können und aufgrund der Belastung durch Fassadenelement oder insbesondere Solarmodule in ihrer Ausrichtung nicht zu weit verbiegen.

An die Ausnehmung grenzt eine Sackausnehmung 150 an, die über eine Durchgangsöffnung 153 mit der Ausnehmung 129 in Verbindung steht, so dass beispielsweise eine Madenschraube, die an der den kurzem und langen Haltestegen 131, 141 abgewandten Seite eingeschraubt wird. Zur genauen Positionierung der Madenschraube ist an der abgewandten Seite ein nutförmiger Befestigungspunkt 115 vorgesehen zur Aufnahme der Schraubenspitze der Madenschraube.

Um eine ausreichende Biegesteifigkeit und Torsionssteifigkeit mit einem in der Ausnehmung 129 montierten und fixierten Verbindungselement 200 zu erzielen, liegt der Quotient aus WG, der Gesamtbreite der Einlegeprofilschiene 100, und WH im Bereich von etwa 1,2 und 1,4 bevorzugt bei etwa 1,3.

Um eine ausreichende Biegesteifigkeit und Torsionssteifigkeit mit einem in der Ausnehmung 129 montierten und fixierten Verbindungselement 200 zu erzielen, liegt der Quotient aus HTH, des Abstandes der Oberflächen der Tragaufnahme 130 und der Halteaufnahme 140, und HK im Bereich von etwa 1,4 und 1,5 bevorzugt bei etwa 1,5.

Die Montageplatte 110 besitzt jeweils die U-förmigen Tragaufnahme bzw. die U-förmigen Halteaufnahme überragende Abschnitte 111, 112 als Montageabschnitte. Die Montageabschnitte eigenen sich besonders für Schraub- oder Nietverbindungen oder dergleichen zur mittelbaren oder unmittelbaren Verankerung am Baukörper. Dazu sind in der Fig. 1 bevorzugte Ansatzstellen oder Befestigungspunkte 113, 114 für Bohrungen bzw. für Schneidschrauben ausgebildet. An diesen Stellen können auch bereits entsprechende Bohrungen werkseitig vorgesehen werden. Die Anordnung dieser Montageabschnitte ist besonders vorteilhaft, weil keine der auf der Kragplatte 120 angeordneten Strukturen einen direkten Zugang zu den Befestigungspunkten behindert. Damit ist die Einlegeprofilschiene 100 besonders montagefreundlich. Eine derartige Ansatzstelle oder ein derartiger Befestigungspunkt 115 ist ebenfalls für die Befestigungsschraube, insbesondere eine Madenschraube, an geeigneter Stelle gegenüber einer Sackausnehmung 150 angeordnet bzw. ausgebildet ist. Diese Ansatzstellen erlauben ein genaues Positionieren einer entsprechenden Schraube, so dass ein einfaches Montieren der Montageplatte bzw. Flansch 110 der Einlegeprofilschiene 100 möglich ist.

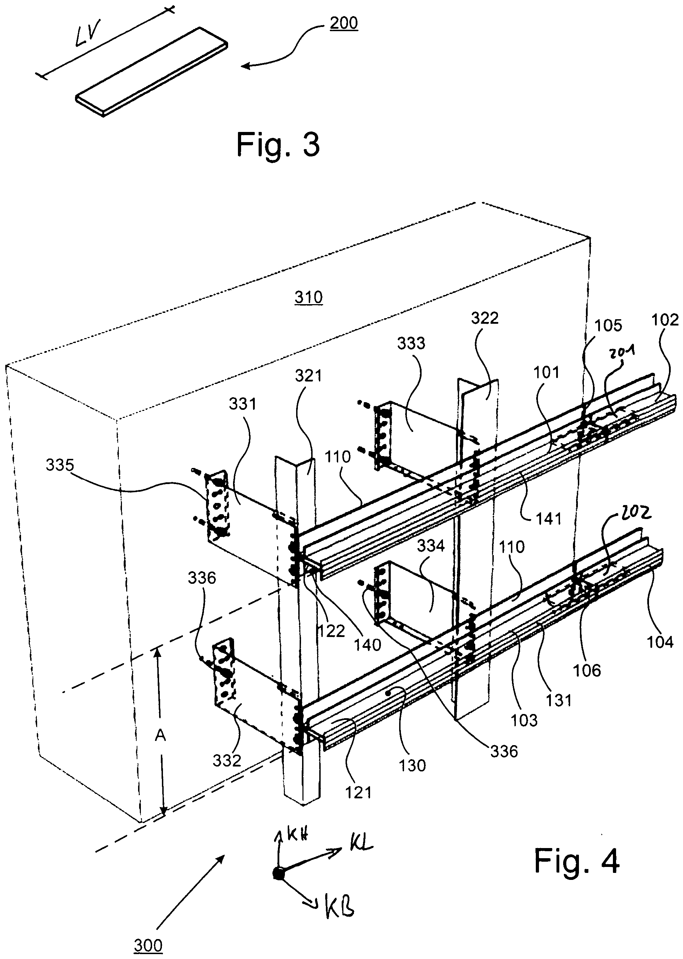

Die Figur 3 zeigt ein Verbindungselement 200 für eine Stossverbindung horizontal benachbarter Einlegeprofilschienen 100 der Fig. 1 und 2. Das Verbindungselement 200 ist im Wesentlichen ein Riegel, dessen Abmessungen komplementär zur Ausnehmung 129 in den Stirnflächen 127 bzw. 128 der Einlegeprofilschiene 100 sind und eine vorbestimmte Längenabmessung LV in Langrichtung KL aufweist. Zur Verbindung benachbarter Einlegeprofilschienen 100 wird das Verbindungselement 200 einfach in die jeweilige Ausnehmung 129 der beiden Einlegeprofilschienen 100 eingeschoben. Anschließend kann das Verbindungselement 200 in den beiden benachbarten Einlegeprofilschienen 100 fixiert werden, indem einfach von oben oder unten durch die Kragplatte 120 in das Verbindungselement 200 gebohrt und dann eine Schraube oder ein Niet eingesetzt wird. Alternativ kann das Verbindungselement 200 auch mit einem geeigneten Kleber in die stirnseitigen Aufnahmen 129 der Einlegeprofilschienen 100 eingeklebt werden, d.h. benachbarte Einlegeprofilschienen auch mittels geeigneter Klebung fest verbunden werden. Bevorzugt wird das Verbindungselement mittels einer Madenschraube fixiert, die in die Sackausnehmung 150 eingeschraubt wird, wobei als Montagehilfe ein Befestigungspunkt bzw. eine Anlegestelle an der Montageplatte 110 gegenüber der Sackausnehmung 150 vorgesehen ist. Die Sackausnehmung 150 steht mit der Ausnehmung 129 zur Aufnahme des Verbindungselements über die Durchgangsöffnung 153 in Verbindung. Um eine ausreichende Biegesteifigkeit in Richtung KB und KL und eine ausreichende Torsionssteifigkeit um KL zu erhalten ist des Verbindungselement in etwa mit der Hälfte der Länge LV in die Ausnehmung 129 einzustecken. Der Quotient aus LE und LV (LE/ LV) liegt im Bereich von etwa 3,9 bis 4,3, bevorzugt bei etwa 4,2.

Die Figur 4 veranschaulicht ein erfindungsgemäßes Befestigungssystem 300 für eine vorgehängte Verkleidung aus, bevorzugt plattenförmigen, Fassadenelementen, besonders bevorzugt gerahmten Photovoltaikmodulen und solarthermischen Kollektoren, zur Verankerung an einem Baukörper 310. Der Baukörper 310 ist in der Figur 4 als ein Wandabschnitt beispielsweise aus Beton vereinfacht veranschaulicht.

In der beispielhaften Darstellung des Befestigungssystems der Figur 4 sind je zwei obere Einlegeprofilschienen 101, 102 und zwei untere Einlegeprofilschienen 103, 104 horizontal und zueinander parallele angeordnet. Die beiden oberen Einlegeprofilschienen 101, 102 sind an der Stoßstelle 105 mit einem Verbindungselement 201 und die unteren Einlegeprofilschienen 103, 104 sind an der Stoßstelle 106 mit einem Verbindungselement 202 verbunden.

Die Kombination aus einer Verbindung der Einlegeprofilschienen an der Stoßstelle 106 über die jeweiligen Verbindungselemente 200, 201, 202 erlaubt ein einfaches Verlängern des Befestigungssystems auf die gewünschte Fassadenbreite, ohne dass Zwangsspannungen die Fassade und/ oder die Tragprofile 321, 322 und Abstandhalter beschädigen können, da durch eine einseitige Befestigung des Verbindungselements 200 in der Ausnehmung mittels einer Schraubverbindung einerseits ein Festlager und andererseits ein Loslager ausgebildet ist, wobei über das Loslager Zwangspannungen durch unterschiedliche Temperaturausdehnungen an der Fassade, der Fassadenelemente und der Einlegeprofilschiene dort abgebaut werden können

Zum Tragen und Halten von zwischen zwei oberen Einlegeprofilschienen 101, 102 und zwei unteren Einlegeprofilschienen 103, 104 zu montierenden Fassadenelementen sind die oberen Einlegeprofilschienen 101, 102 und unteren Einlegeprofilschienen 103, 104 in einem vorbestimmten vertikalen Abstand A zueinander an einem Unterbau befestigt. Der Abstand A ist hier von der oberen Kragfläche 121 der unteren Einlegeprofilschiene 103 zur unteren Kragfläche 122 der oberen Einlegeprofilschiene 101 gemessen.

Die unteren Einlegeprofilschienen 103, 104 besitzen jeweils nach oben gerichtete im Wesentlichen U-förmige Tragaufnahmen 130, die auf der Sichtseite der Fassade von einem kurzen Haltesteg 131 abgeschlossen sind. Diese Tragaufnahmen 130 nehmen untere Kanten der zu montierenden Fassadenelemente auf und tragen später auch das Gewicht montierter Fassadenelemente, d.h. die Vertikallast der Fassade, ab.

Die oberen Einlegeprofilschienen 101, 102 besitzen jeweils nach unten gerichtete im Wesentlichen U-förmige Halteaufnahme 140, die auf der Sichtseite der Fassade von einem langen Haltesteg 141 abgeschlossen sind. Diese Halteaufnahmen 140 nehmen obere Kanten der zu montierenden Fassadenelemente auf.

Die Einlegeprofilschienen 101, 102, 103, 104 sind jeweils über die Montageplatte 110 an einem Unterbau befestigt, der am Baukörper 310 verankert ist. Der Unterbau besteht aus vertikalen Tragprofilen 321, 322, die über Abstandhalter 330 am Baukörper 310 verankert sind. Von zwei vertikal benachbarten Abstandhaltern 331, 332 bzw. 333, 334 sind jeweils der obere über ein Festlager 335 und der untere über ein Loslager 336 am Baukörper 310 verankert. Die Festlager 335 sind jeweils durch zwei Befestigungsmittel, z. B. Schrauben, zur Befestigung einer Einlegeprofilschiene mit dem Baukörper 310 gebildet. Die Loslager 336 sind jeweils nur durch ein Befestigungsmittel, z. B. ebenfalls eine Schraube, in einem Langloch mit dem Baukörper 310 gebildet. Durch die Kombination von Loslager und Festlager können Verspannungen durch Fertigungsabweichungen, Wärmedehnungen oder Lastwechsel in der Fassade vermieden werden.

Es noch angemerkt, dass die Einlegeprofilschienen des erfindungsgemäßen Befestigungssystems gegebenenfalls auch direkt am Baukörper 310 verankert werden können bzw. auch eine direkte Befestigung an auf der unverkleideten Fassade verlaufenden T- oder Doppel-T-Trägern möglich ist.

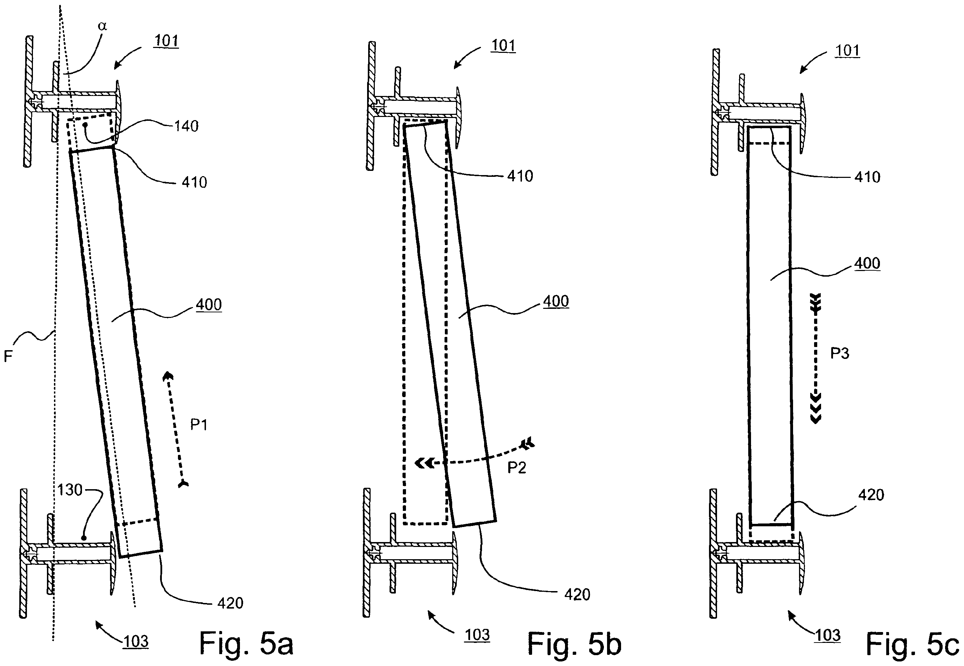

An den Innenseiten der Tragaufnahmen 130 bzw. der Haltaufnahme 140, aber auch an den Montagekanten der Fassadenelemente werden zur Vermeidung eines direkten Kontaktes zwischen den Fassadenelementen und den aus Metall gefertigten Einlegeprofilschienen 101, 102, 103, 104 elastische Schutzelemente (nicht gezeigt) vorgesehen, damit auch bei Lastwechseln oder aufgrund von Temperaturwechseln keine Spannungen durch die Einlegeprofilschienen an den Fassadenelementen erzeugt werden. Bevorzugt wird jedoch auf die Schutzelemente verzichtet, da mit den erfindungsgemäßen Einlegeprofilschienen ein einfaches und unaufwendiges Einklemme der jeweiligen Fassadenelemente möglich ist, ohne dass zusätzliche Klemm- oder Schraubvorrichtungen zum Fixieren der Fassadenelemente an den Einlegeprofilschienen erforderlich sind. Dies erlaubt ein besonders schnelles und einfaches Montieren der Fassadenelement in vormontierten Einlegeprofilschienen, wie es beispielsweise in der Figur 4 dargestellt ist. Der Montagevorgang der Fassadenelemente ist in den Figuren 5a und 5b dargestellt. Aus diesen ist ersichtlich, dass, wenn das Fassadenelement in der Endmontagestellung gemäß der Figur 5c gelegen ist, keine weiteren Fixierungen des Fassadenelements an den Einlegeschienen erforderlich sind.

Die Figuren 5a, 5b und 5c illustrieren die drei wesentlichen Schritte des Montageverfahrens für ein Fassadenelement 400 in ein Befestigungssystem 300 gemäß der Figur 4, wobei jeweils die Ansicht einer Stirnseite des Befestigungssystems 300 der Figur 4 gezeigt ist.

Die Figur 5a zeigt den ersten Schritt des Montageverfahrens, in dem eine obere Montagekante 410 des Fassadenelements 400 unter einem Einschubwinkel α gegenüber einer durch die Fassade definierten Fassadenebene F in Richtung des Pfeils P1 in die Halteaufnahme 140 der oberen Einlegeprofilschiene 101 der zwei vertikal benachbart zueinander angeordneten Einlegeprofilschienen 101, 103 eingeschoben wird.

Die Figur 5b zeigt den zweiten Schritt des Montageverfahrens, in dem das Fassadenelement 400 in die Fassade durch Kippen des Fassadenelements 400 in Richtung des Pfeils P2 um den Einschubwinkel α in Richtung der Fassadenebene F eingeklappt wird.

Die Figur 5c zeig den dritten Schritt des Montageverfahrens, in dem schließlich eine untere Montagekante 420 des Fassadenelements 400 in die Tragaufnahme 130 der unteren Einlegeprofilschiene 103 durch Absenken in Richtung des Pfeils P3 eingelegt wird.

Das besonders einfache und schnelle Montieren eines Fassadenelements ist im Wesentlichen auf die Dimensionierung des kurzen Haltestegs 131 und des langen Haltestegs 141 der Einlegeprofilschienen 100, 101, 102, 103, 104 sowie der geeigneten vertikalen Beabstandung der Einlegeprofilschienen zurückzuführen. Dadurch, dass eine Halteaufnahme 140 einen langen Haltesteg 141 besitzt kann beim Montieren des Fassadenelements das letztere mit seiner oberen Montagekante in die Halteaufnahme so weit eingeschoben werden, dass seine untere Montagekante den kurzen Haltesteg 131 der Tragaufnahme 130 überwinden kann. Nachdem das Fassadenelement mit seiner unteren Montagekante in die Tragaufnahme 130 eingelegt wurde, stellt der lange Haltesteg 141 der Halteaufnahme 140 sicher, dass das Fassadenelemente nicht aus der oberen Einlegprofilschiene herauskippen kann, ohne dass zusätzliche Klemm- oder Schraubverbindungen erforderlich sind, um das Fassadenelement in den Einlegeschienen zu fixieren. Der kurze und lange Haltesteg halten das Fassadenelement an Ort und Stelle und sichern es ausreichend gegen eine mögliche Windbelastung bei Bauwerken bis zu 20 Meter Höhe. Bei Bauwerken über diese Höhe können aus statischen- und sicherheitsrelevanten Gründen Klemmleisten erforderlich sein, die die Fassadenelemente in den Einlegeprofilschienen sichern.

Das erfindungsgemäße Befestigungssystem ermöglicht damit eine im Vergleich zu bekannten Systemen deutlich einfachere und schnellere Montage der Fassadenelemente und eignet sich besonders gut für die Montage von gerahmten Photovoltaikmodulen und Solarthermischen Kollektoren als Fassadenelemente.

## Patentansprüche

1. Einlegeprofilschiene (100) als horizontales Trag- und Halteelement in einem Befestigungssystem für eine vorgehängte Verkleidung aus, bevorzugt plattenförmigen, Fassadenelementen, insbesondere gerahmten Photovoltaikmodulen und solarthermischen Kollektoren, zur Verankerung an einem Baukörper, mit
- einer sich in einer Längsrichtung (KL) erstreckenden Montageplatte (110), deren Querschnitt sich in der Längsrichtung (KL) gesehen in einer Breitenkoordinate (KB) und einer Höhenkoordinate (KH) erstreckt,
- einer senkrecht, bevorzugt mittig, an der Montageplatte (110) mit einem ersten Ende (123) angeordneten Kragplatte (120) mit entlang einander und entgegensetzt zueinander gelegenen Kragflächen (121, 122), wobei die Kragflächen (121, 122) mit einem Abstand zueinander angeordnet sind und eine Ausnehmung (129) zur Aufnahme eines Verbindungselements (200) zur Verbindung mit einer jeweils benachbarten Einlegeprofilschiene definieren, die sich in Längsrichtung (KL) der Kragplatten (120) erstreckt,
- einer Tragaufnahme (130) für ein oberes Fassadenelement auf einer oberen (121) der Kragflächen, die in Bezug auf den Querschnitt der Montageplatte (110) die Form einer Ausnehmung hat und an einem zweiten Ende (124) der Kragplatte (120) von einem kurzen, in der Höhenkoordinate (KH) verlaufenden Haltesteg (131) abgeschlossen ist,
- einer Halteaufnahme (140) für ein unteres Fassadenelement auf einer unteren (122) der Kragflächen, die in Bezug auf den Querschnitt der Montageplatte (110) die Form einer Ausnehmung hat und am zweiten Ende (124) der Kragplatte (120) von einem langen Haltesteg (141) abgeschlossen ist, wobei sich der lange Haltesteg (141) von der jeweiligen Kragfläche (121, 122) der Kragplatte (120) aus gesehen über eine größere Länge erstreckt wie der kurze Haltesteg (131), wobei die Tragaufnahme (130) und die Halteaufnahme im Wesentlichen U-förmig sind,
wobei die Tragaufnahme (130) durch einen oberen Kragflächenabschnitt (125) der oberen Kragfläche (121) als Grundfläche (132) sowie einen oberen, senkrecht an der Kragplatte (120) angeordneten Rückensteg (133) und den kurzen Haltesteg (131) als Schenkel gebildet ist,
wobei die Halteaufnahme (140) von einem Kragflächenabschnitt (126) der unteren Kragfläche (122) als Grundfläche (142) sowie einem unteren, senkrecht an der Kragplatte (120) angeordneten Rückensteg (143) und dem langen Haltesteg (141) als Schenkel gebildet ist,
**dadurch gekennzeichnet, dass**
die Tragaufnahme (130) und die Halteaufnahme (140) jeweils mit vorbestimmtem Abstand zur Montageplatte (110) an der Kragplatte angeordnet sind,
und dass wenigstens der kurze Haltesteg auf der Sichtseite (S) mit einer konvexen Krümmung versehen ist.

2. Einlegeprofilschiene (100) gemäß Anspruch 1, wobei der lange Haltesteg (141) etwa 1,5 bis 3 mal so hoch wie der kurze Haltesteg (131) ist.

3. Einlegeprofilschiene (100) gemäß einem der vorhergehenden Ansprüche,
wobei in der Kragplatte (120) an deren ersten Kragplattenende (123) und neben der Ausnehmung (129) eine Sackausnehmung (150) ausgebildet ist, die über eine Durchgangsöffnung (153) mit der Ausnehmung (129) in Verbindung steht, so dass ein plattenförmiges Verbindungselement (200) einseitig an der Montageplatte (110) der Einlegeprofilschiene (100) mittels einer Madenschraube fixierbar ist.

4. Einlegeprofilschiene (100) gemäß einem der voranstehenden Ansprüche, wobei an einem Endabschnitt (135) des kurzen Haltestegs (131) an der von der Tragaufnahme (130) entgegengesetzten Seite ein sich verjüngender Endabschnitt ausgebildet ist, der sich von dem oberen Ende des Endabschnittes (135) entlang der Höhenkoordinate (KH) in Richtung der Breitenkoordinate (KB) verbreitert.

5. Einlegeprofilschiene (100) gemäß Anspruch 4, wobei an dem Endabschnitt des langen Haltesteg (141) an der von der Halteaufnahme (140) entgegengesetzten Seite ein sich verjüngender Endabschnitt (145) ausgebildet ist, der sich von dem oberen Ende des Endabschnittes entlang der Höhenkoordinate (KH) in Richtung der Breitenkoordinate (KB) verbreitet.

6. Einlegeprofilschiene (100) nach einem der voranstehenden Ansprüche, wobei ein Verhältnis der Weitenöffnung (W13, W14) der Tragaufnahme (130) bzw. Halteaufnahme (140) in der Breitenkoordinate (KB) in Bezug auf die Höhenabmessung (HG) der Montageplatte (110) in der Höhenkoordinate (KH) im Bereich von etwa 0, 4 bis 0,6liegt.

7. Einlegeprofilschiene (100) gemäß einem der voranstehenden Ansprüche, wobei die Tragaufnahme (130) und die Halteaufnahme (140) bevorzugt im gleichen Abstand (D) zur Montageplatte (110) an der Kragplatte (120) angeordnet sind, wobei das Verhältnis des Abstandes (D) in Bezug zu der Weitenöffnung (W13, W14) der Tragaufnahme (130) bzw. Halteaufnahme (140) in der Breitenkoordinate (KB) im Bereich von etwa 0,3 bis 0,5 liegt.

8. Befestigungssystem (300) zur Aufnahme von Fassadenelementen (400), wobei das Befestigungssystem (300) zwei in einer Längsrichtung (KL) jeweils benachbart gelegene Einlegeprofilschienen (100) nach einem der voranstehenden Ansprüche aufweist, wobei in den jeweils benachbarten Ausnehmungen (129) der Kragplatten (120) ein plattenförmiges Verbindungselement (200) gelegen ist.

9. Befestigungssystem (300) nach dem Anspruch 8, wobei an Innenseiten der Tragaufnahme (130) und der Haltaufnahme (140) zur Vermeidung eines direkten Kontaktes zwischen Fassadenelementen (400) und Einlegeprofilschienen (100) elastische Schutzelemente angeordnet sind.

10. Verfahren zur Montage von Fassadenelementen in ein Befestigungssystem gemäß einem der Ansprüche 8 bis 9, mit den Schritten:
- Einschieben einer oberen Kante (410) eines Fassadenelements (400) unter einem Einschubwinkel (α) gegenüber einer durch die Fassade definierten Fassadenebene (F) in eine Halteaufnahme (140) einer oberen Einlegeprofilschiene (101) zweier benachbart zueinander angeordneten Einlegeprofilschienen (101),
- Einklappen des Fassadenelements (400) in die Fassade durch Kippen des Fassadenelements um den Einschubwinkel (α) in Richtung der Fassadenebene (F),
- Einlegen einer unteren Kante (420) des Fassadenelements (400) in eine Tragaufnahme (130) einer unteren Einlegeprofilschiene (103), wobei die Einlegeprofilschienen (101, 103) benachbart zueinander angeordnet sind.

11. Fassade für einen Baukörper (310) wenigstens teilverkleidet mit Fassadenelementen (400), die mit einem Befestigungssystem (300) gemäß einem der Ansprüche 8 bis 9 am Baukörper (310) verankert sind.

## Claims

1. Insertion profile rail (100) as a horizontal support and holding element in a mounting system for an exterior cladding, preferably plate-shaped, facade elements, in particular framed photovoltaic modules and solar-thermal collectors, for anchoring to a building structure, with
- a mounting plate (110) extending in a longitudinal direction (KL), the cross-section of which extends in a width coordinate (KB) and a height coordinate (KH), when viewed in the longitudinal direction (KL),
- a cantilever plate (120) with cantilevered surfaces (121, 122) arranged opposite one another, wherein the cantilever plate (120) is arranged vertically, preferably centrally, with a first end (123) on the mounting plate (110), wherein the cantilever surfaces (121, 122) are arranged at a specific distance to each other and define a recess (129) for receiving a connection element (200) for connection to a respective adjacent insertion profile rail which extends in the longitudinal direction (KL) of the cantilevers (120),
- a support frame (130) for an upper facade element on an upper (121) of the cantilever surfaces, wherein the retaining frame (140) has the shape of a recess with respect to the cross-section of the mounting plate (110) and is terminated at a second end (124) of the cantilever plate (120) by a short holding web (131) which extends in the height coordinate (KH),
- a retaining frame (140) for a lower facade element on a lower (122) of the cantilever surfaces, which has the shape of a recess with respect to the cross section of the mounting plate (110), and is terminated by a long retaining web (141) at the second end (124) of the cantilever panel (120), wherein the long holding web (141) extends, viewed from the respective cantilever surface (121, 122) of the cantilever (120), over a longer length as the short holding web (131), wherein the support frame (130) and the retaining frame are substantially U-shaped,
wherein the support frame (130) is formed by a top cantilever surface section (125) of the upper cantilever surface (121) as base surface (132) and an upper back web (133) which is arranged perpendicular to the cantilever plate (120) and the short holding web (131) as legs,
wherein the retaining frame (140) is formed by a cantilever surface section (126) of the lower cantilever surface (122) as base surface (142) and a lower back web (143) which is arranged vertically on the cantilever plate (120) and the long holding web (141) as legs,
**characterized in that**
the support frame (130) and the retaining frame (140) are each arranged at a predetermined distance from the mounting plate (110) on the cantilever plate,
and that at least the short holding web on the visible side (S) is provided with a convex curvature.

2. Insertion profile rail (100) of claim 1, wherein the long holding web (141) is about 1,5 to 3 times as high as the short holding web (131).

3. Insertion profile rail (100) according to one of the preceding claims, wherein in the cantilever plate (120) at its first cantilever plate end (123) and next to the recess (129) a blind recess (150) is formed, which via a passage opening (153) is connected with the recess (129) is so that a plate-shaped connecting element (200) is fixable on one side of the mounting plate (110) of the insertion profile rail (100) by means of a grub screw.

4. Insertion profile rail (100) according to one of the preceding claims, wherein at an end portion (135) of the short holding web (131) on the side contrary to the support frame (130) a tapered end portion (200) is formed which broadens from the upper end of end portion (135) along the height coordinate (KH) in the direction of the width coordinate (KB).

5. Insertion profile rail (100) according to claim 4, wherein at the end portion of the long holding web (141) at the side contrary to the retaining frame (140), a tapered end portion (145) is formed which extends from the upper end of the end portion along the height coordinate (KH) in the direction to the width coordinate (KB).

6. Insertion profile rail (100) according to one of the preceding claims, wherein a ratio of the width opening (W13, W14) of the support frame (130) and retaining frame (140), respectively, in the width coordinate (KB) with respect to the height dimension (HG) of the mounting plate (110) in the height coordinate (KH) lies in a range of about 0,4 to 0,6.

7. Insertion profile rail (100) according to one of the preceding claims, wherein the support frame (130) and the retaining frame (140) are arranged preferably at the same distance (D) to the mounting plate (110) at the cantilever plate (120), wherein the ratio of the distance (D) with respect to the width opening (W13, W14) of the support frame (130) and retaining frame (140), respectively,in the width coordinate (KB) lies in the range of about 0,3 to 0,5.

8. Mounting system (300) for receiving facade elements (400), wherein the mounting system (300) comprises two insertion profile rails (100) according to one of the preceding claims, which respectively lie adjacent in a longitudinal direction (KL), wherein in the respective adjacent recesses (129) of the cantilever plates (120) a plate-shaped connecting element (200) is located.

9. Mounting system (300) according to claim 8, wherein on the inner sides of the support frame (130) and the retaining frame (140) elastic protective elements are arranged in order to avoid a direct contact between the facade elements (400) and insertion profile rails (100).

10. A method of assembling facade elements in a mounting system according to one of claims 8 to 9, comprising the steps:
- inserting of an upper edge (410) of a facade element (400) at an insertion angle (α) with respect to a facade plane (F) defined by the facade into a retaining frame (140) of an upper insertion profile rail (101) of two insertion profile rails (101) arranged adjacent to one another,
- folding the facade element (400) into the facade by tilting the facade element by the insertion angle (α) in the direction of the facade plane (F),
- inserting a lower edge (420) of the facade element (400) in a support frame (130) of a lower insertion profile rail (103), wherein the insertion profile rails (101, 103) are arranged adjacent to each other.

11. Facade for a building structure (310) at least partially clad with facade elements (400), which are anchored to the building structure (310) with a mounting system (300) according to one of claims 8 to 9.

## Revendications

1. Rail à profil d'insertion (100) comme élément de soutien et de support dans un système de fixation pour une façade-rideau réalisée de préférence par des éléments de façade en forme de plaque, en particulier par des modules photovoltaiques encadrés, et des collecteurs thermo-solaires, pour l'ancrage a une structure de construction, avec
- une plaque de montage (110) s'étendant dans un sens longitudinal (KL), dont la section transversale, vue dans le sens longitudinal (KL), s'étend dans une coordonné de latitude (KB) et une coordonné de hauteur (KH),
- une plaque en porte-à-faux (120) agencé avec une première extrémité (123) à la plaque de montage (110) de manière vertical, de préférence central, avec des surfaces de porte-à-faux (121, 122) situées l'une le long de l'autre et l'une opposée à l'autre, les surfaces de porte-à-faux (121, 122) étant agencées avec une distance mutuelle et définissant un logement (129) pour recevoir un élément de connexion (200) pour la connexion avec un rail d'insertion respectif adjacent qui s'étend dans le sens longitudinal (KL) des plaques en porte-à-faux (120),
- un logement porteur (130) pour un élément de façade supérieur sur une surface de porte-à-faux (121) supérieure qui, par rapport à la section transversale de la plaque de montage (110) a la forme d'un logement et qui, à une deuxième extrémité (124) de la plaque en porte-à-faux (120) est terminé par une barre de support (131) courte s'étendant dans la coordonnée de hauteur (KH),
- un logement de maintien (140) pour un élément de façade inférieur sur une surface de porte-à-faux (122) inférieure qui, par rapport à la section transversale de la plaque de montage (110) a la forme d'un logement et qui, à la deuxième extrémité (124) de la plaque en porte-à-faux (120) est terminé par une barre de support (141) longue, la barre de support (141) longue s'étendant de la surface de porte-à-faux (121, 122) respective de la plaque en porte-à-faux (120) sur une plus grande longueur que la barre de support (131) courte, le logement porteur (130) et le logement de maintien étant essentiellement en forme de U,
le logement porteur (130) étant réalisé par une section de surface de porte-à-faux supérieure (125) de la surface de porte-à-faux supérieure (121) en tant que surface de base (132) et par une barre de dos (133) supérieure agencée de manière verticale à la plaque en porte-à-faux (120) et la barre de support courte (131) en forme de branches,
le logement de maintien (140) étant réalisé par une section de surface de porte-à-faux (126) de la surface de porte-à-faux inférieure (122) en tant que surface de base (142) et par une barre de dos (143) inférieure agencée de manière verticale à la plaque en porte-à-faux (120) et la barre de support longue (141) en forme de branches,
**caractérisé en ce que**
le logement porteur (130) et le logement de maintien (140) sont agencés à la plaque en porte-à-faux respectivement avec une distance prédéterminée à la plaque de montage (110),
et **en ce qu'**au moins la barre de support courte est dotée d'une courbure convexe sur le côté apparent (S).

2. Rail à profil d'insertion (100) selon la revendication 1, la barre de support longue (141) étant 1,5 à 3 fois plus haute que la barre de support courte (131).

3. Rail à profil d'insertion (100) selon une des revendications précédentes, où dans la plaque en porte-à-faux (120) a sa première extrémité de plaque en porte-à-faux (123) et à côté du logement (129) un logement borgne (150) est formé qui est en communication avec le logement (129) via une ouverture de passage (153), de sorte qu'un élément de connexion en forme de plaque (200) peut être fixé à une extrémité à la plaque de montage (110) du rail d'insertion (100) au moyen d'un vis sans tête.

4. Rail à profil d'insertion (100) selon une des revendications précédentes, où à une section d'extrémité (135) de la barre de support courte (131) au côté opposé au logement porteur (130) une section d'extrémité rétrécissant est formée, qui s'élargit depuis l'extrémité supérieure de la section d'extrémité (135) le long de la coordonne de hauteur (KH) en direction de la coordonnée de latitude (KB).

5. Rail à profil d'insertion (100) selon la revendication 4, où à la section d'extrémité de la barre de support longue (141) au côté opposé au logement de maintien (140) une section d'extrémité rétrécissant (145) est formée, qui s'élargit depuis l'extrémité supérieure de la section d'extrémité le long de la coordonne de hauteur (KH) en direction de la coordonnée de latitude (KB).

6. Rail à profil d'insertion (100) selon une des revendications précédentes, où un rapport de l'ouverture de largeur (W13, W14) du logement porteur (130) ou du logement de maintien (140) dans la coordonnée de latitude (KB) en relation à la dimension de hauteur (HG) de la plaque de montage (110) dans la coordonnée de hauteur (KH) est comprise entre approximativement 0,4 et 0,6.

7. Rail à profil d'insertion (100) selon une des revendications précédentes, où le logement porteur (130) et le logement de maintien (140) sont arrangés avec la même distance (D) à la plaque de montage (110) à la plaque en porte-à-faux (120) où le rapport de la distance (D) en relation à l'ouverture de largeur (W13, W14) du logement porteur (130) ou du logement de maintien (140) dans la coordonnée de latitude (KB) est comprise entre approximativement 0,3 et 0,5.

8. Système de fixation (300) pour recevoir des éléments de façade (400), le système de fixation (300) comprenant respectivement deux rails à profil d'insertion (100) adjacents dans un sens longitudinal (KL) selon une des revendications précédentes, où dans les logements adjacents (129) des plaques en porte-à-faux (120) un élément de connexion en forme de plaque (200) est situé.

9. Système de fixation (300) selon la revendication 8, où sur les faces intérieures du logement porteur (130) et du logement de maintien (140) des éléments élastiques de protection sont arrangés entre les éléments de façade (400) et les rails de profil d'insertion (100) pour éviter un contact direct.

10. Procédé pour monter des éléments de façade dans un système de fixation selon une des revendications 8 à 9, comprenant les étapes suivantes :
- insérer un bord supérieur (410) d'un élément de façade (400) avec un angle d'insertion (α) par rapport à un plan de façade (F) défini par la façade dans un logement de maintien (140) d'un rail de profil d'insertion supérieur (101) de deux rails de profil d'insertion adjacents associés (101),
- intégrer l'élément de façade (400) dans la façade en pivotant l'élément de façade autour de l'angle d'insertion (α) en direction du plan de la façade (F),
- insérer un bord inférieur (420) de l'élément de façade (400) dans un logement porteur (130) d'un rail à profil d'insertion inférieur (103), les rails à profil d'insertion (101, 103) étant arrangés de manière adjacente.

11. Façade pour une structure de construction (310), revêtue au moins en partie avec des éléments de façade (400) ancrés à la structure de construction (310) par un système de fixation (300) selon une des revendications 8 à 9.
